# EUROPÄISCHE PATENTANMELDUNG

(11) **EP 1 320 177 A2**
(43) Veröffentlichungstag der Anmeldung: **18.06.2003**
(21) Anmeldenummer: 02027040.1
(22) Anmeldetag: 03.12.2002
(51) Int. Cl.: H02K 11/00

(54) **Halteplatte für einen Elektromotor und Elektromotor**

(30) Priorität: 12.12.2001 DE 10160845
(71) Anmelder: Valeo Motoren und Aktuatoren GmbH, 74321 Bietigheim-Bissingen (DE)
(72) Erfinder: Frey, Ronald, 74357 Bönnigheim (DE); Helmich, Johannes, 97877 Wertheim (DE); Schmidt, Harald, 74374 Zaberfeld (DE); Baeskow, Werner, 74394 Hessigheim (DE)
(74) Vertreter: Jahn, Wolf-Diethart

(57) **Zusammenfassung**

Die vorliegende Erfindung betrifft eine Halteplatte für einen Elektromotor, die eine Bürstenanordnung und Entstörbauteile aufweist, und bei der zusätzliche elektronische Bauteile zur Erfassung der Drehzahl des Elektromotors sowie zur Diagnose der Anordnung direkt auf der Halteplatte angebracht sind.

Die Kontaktierung der Entstörbauteile und der zusätzlichen elektronischen Bauteile erfolgt durch elektrische Leiterbahnen, die direkt auf der Halteplatte angebracht sind. Ein flexibler Einsatz des Elektromotors ist durch eine hohe Temperaturbeständigkeit der Halteplatte gewährleistet.

## Beschreibung

Die vorliegende Erfindung betrifft eine Halteplatte für einen Elektromotor, die eine Bürstenanordnung und Entstörbauteile aufweist.

Herkömmliche Halteplatten bestehen aus Kunststoff und dienen als Träger für die Bürstenanordnung des Elektromotors, die bspw. Kohlebürsten und Kohlenhalter zur Aufnahme der Kohlebürsten aufweist. Üblicherweise sind Entstörbauteile wie z. B. Spulen oder Kondensatoren auch direkt auf der Halteplatte befestigt.

Ein großer Nachteil bekannter Halteplatten besteht darin, dass sie nur für einen Temperaturbereich bis maximal etwa 120°C ausgelegt sind. Da bekannte Systeme keine Überwachung der Temperatur der Halteplatte vorsehen, ist es nicht möglich, das Leistungspotential des Elektromotors voll auszuschöpfen, ohne eine Überschreitung der maximal zulässigen Temperatur der Halteplatte zu riskieren.

Ein weiterer Nachteil bekannter Systeme besteht darin, dass elektronische Bauteile zur Auswertung der Motordrehzahl und dergleichen auf einer separaten Platine angeordnet sind, die bei der Fertigung in einem zusätzlichen Produktionsschritt mit der Halteplatte verbunden werden muss.

Aufgabe der vorliegenden Erfindung ist es, eine verbesserte Halteplatte für einen Elektromotor unter Umgehung der aufgeführten Nachteile des Standes der Technik zu schaffen und damit einen verbesserten Elektromotor bereitzustellen.

Bei einer Halteplatte der eingangs genannten Art wird diese Aufgabe erfindungsgemäß dadurch gelöst, dass zusätzliche elektronische Bauteile direkt auf der und/oder integriert in der Halteplatte angebracht sind. Dadurch wird insbesondere der Herstellungsprozess vereinfacht.

Eine besonders vorteilhafte Ausführungsform der vorliegenden Erfindung ist dadurch gekennzeichnet, dass elektrische Leiterbahnen zur Kontaktierung der Bürstenanordnung und/oder der Entstörbauteile direkt auf der Halteplatte und/oder integriert in der Halteplatte angebracht sind, wodurch eine separate Verbindung der Bürstenanordnung bzw. der Entstörbauteile untereinander oder ggf. auch mit weiteren elektrischen Komponenten mittels Kabeln nicht mehr notwendig ist.

Die Befestigung von Entstörbauteilen auf der Halteplatte kann mit Hohlnieten realisiert werden, die mit den Anschlüssen der Entstörbauteile verschweißt und elektrisch leitend mit den entsprechenden elektrischen Leiterbahnen der Halteplatte verbunden sind.

Sehr vorteilhaft ist es auch, elektrische Leiterbahnen zur Kontaktierung der zusätzlichen elektronischen Bauteile direkt auf der Halteplatte anzubringen, so dass zur Verbindung der zusätzlichen elektronischen Bauteile keine Steck- oder Kabelverbindungen erforderlich sind.

Es ist auch denkbar, zumindest Teile der elektrischen Leiterbahnen in einen spritzgegossenen Schaltungsträger zu integrieren.

Eine ganz besonders vorteilhafte Ausführungsform der vorliegenden Erfindung ist dadurch gekennzeichnet, dass mindestens ein Drehgeber zur Erfassung der Drehzahl des Elektromotors direkt auf der Halteplatte angebracht ist. Der/Die Drehgeber ist/sind vorzugsweise als Hall-Drehgeber ausgebildet.

Sehr vorteilhaft ist es auch, zwei Drehgeber auf der Halteplatte anzuordnen. Bei einer speziellen Ausrichtung der beiden Drehgeber relativ zueinander und zu einem mit der Ankerwelle des Elektromotors verbundenen magnetisierten Geberrad ist es möglich, aus einer Phasenverschiebung der Ausgangssignale der beiden Drehgeber die Drehrichtung des Elektromotors zu ermitteln.

Aufgrund der gemeinsamen Anordnung der Drehgeber auf der Halteplatte besteht nur ein minimaler Montageaufwand, um die Drehgeber in korrekter Lage relativ zu dem Geberrad anzuordnen.

Eine weitere vorteilhafte Ausführungsform der erfindungsgemäßen Halteplatte ist dadurch gekennzeichnet, dass eine Diagnoseschaltung direkt auf der Halteplatte angebracht ist. In einer ganz besonders vorteilhaften Variante weist die Diagnoseschaltung mindestens einen vorzugsweise ohmschen Spannungsteiler auf, wobei ein erster Knoten des Spannungsteilers mit einem ersten Bezugspotential der Diagnoseschaltung und ein zweiter Knoten des Spannungsteilers mit einem zweiten Bezugspotential der Diagnoseschaltung verbunden ist.

Vorzugsweise besteht der Spannungsteiler aus drei ohmschen Widerständen in Serienschaltung. Die beiden äußeren Knoten des Spannungsteilers sind jeweils mit verschiedenen Bezugspotentialen der Diagnoseschaltung verbunden, so dass die Differenz der beiden Bezugspotentiale über dem Spannungsteiler abfällt.

Ein Signalausgang eines Drehgebers ist mit einem dritten Knoten des Spannungsteilers verbunden, und eine Signalleitung ist schließlich mit einem vierten Knoten des Spannungsteilers verbunden, so dass je nach Potential am Signalausgang des Drehgebers verschiedene Potentiale an dem vierten Knoten des Spannungsteilers und damit auch an der Signalleitung anliegen.

Diese Beschaltung ermöglicht eine Erkennung von Kurzschlüssen des Signalausgangs des Drehgebers u.a. mit dem Bezugspotential der Versorgungsspannung der zusätzlichen elektronischen Bauteile und mit dem Masse-Bezugspotential. Fehlbeschaltungen bei der Herstellung sowie erst im Betrieb auftretende Kurzschlüsse können einfach erkannt werden, indem das Signal der Signalleitung ausgewertet wird.

Eine weitere, ganz besonders vorteilhafte Ausführungsform der erfindungsgemäßen Halteplatte ist dadurch gekennzeichnet, dass ein Temperatursensor direkt auf der Halteplatte angebracht ist, wodurch eine Messung der Temperatur der Halteplatte im Betrieb möglich ist. Die Betriebssicherheit und Lebensdauer des Elektromotors wird durch eine derartige Temperaturüberwachung der Halteplatte bedeutend gesteigert. Es ist beispielsweise möglich, den Elektromotor direkt in Abhängigkeit eines Signals des Temperatursensors anzusteuern bzw. bei Überschreiten einer vorgebbaren Maximaltemperatur der Halteplatte abzuschalten oder mit reduzierter Leistung zu betreiben.

Als eine weitere Lösung der Aufgabe der vorliegenden Erfindung ist ein Elektromotor gemäß Anspruch 13 vorgeschlagen.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1a: zeigt eine Draufsicht auf die erfindungsgemäße Halteplatte,
- Figur 1b: zeigt eine Seitenansicht der Halteplatte aus Fig. 1a,
- Figur 1c: zeigt die Unterseite der Halteplatte aus Fig. 1a,
- Figur 1d: zeigt eine perspektivische Darstellung der Halteplatte aus Fig. 1a mit zwei Hall-Drehgebern 3,
- Figur 2: zeigt einen Schaltplan der zusätzlichen elektronischen Bauteile, und
- Figur 2a: zeigt den zeitlichen Verlauf zweier Ausgangssignale.

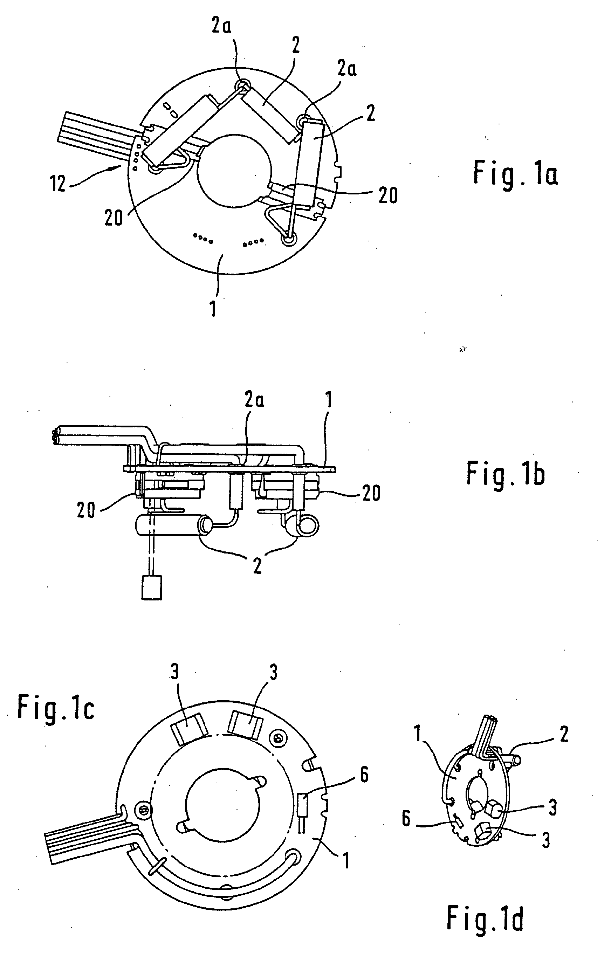

In Fig. 1a ist eine erfindungsgemäße Halteplatte 1 eines Elektromotors (nicht gezeigt) abgebildet, auf der mehrere Entstörbauteile 2 angeordnet sind. Die Entstörbauteile 2 dienen zur Verringerung der von den Kommutierungsvorgängen im Elektromotor herrührenden elektromagnetischen Störstrahlung und sind als Spulen und Kondensatoren ausgebildet.

Die Entstörbauteile 2 sind mit Hohlnieten 2a auf der Halteplatte 1 befestigt und in den Hohlnieten 2a verschweißt. Zur Kontaktierung weiterer, beispielsweise als Kondensatoren ausgebildeter Entstörbauteile 2 sind im Bereich der Hohlnieten 2a direkt auf der Halteplatte 1 angeordnete oder in die Halteplatte integrierte elektrische Leiterbahnen (nicht gezeigt) vorgesehen, die elektrisch leitend mit den Hohlnieten 2a verbunden sind.

Zusätzlich zu den Entstörbauteilen 2 ist eine Bürstenanordnung auf der Halteplatte 1 vorgesehen. Die Bürstenanordnung weist zwei Kohlenhalter 20 auf, von denen jeder eine Kohlebürste (nicht gezeigt) aufnehmen kann. Die Kohlebürste wird von einer im Kohlenhalter 20 befindlichen Druckfeder an den Kommutator des Elektromotors gedrückt.

Wie aus Fig. 1c ersichtlich, sind auf der Unterseite der Halteplatte 1 zwei Hall-Drehgeber 3 angeordnet. Die Hall-Drehgeber 3 sind direkt auf der Halteplatte 1 angebracht und fest mit dieser verbunden. Darüber hinaus sind die elektrischen Anschlüsse der als IC ausgeführten Hall-Drehgeber 3 mit direkt auf der Halteplatte 1 angebrachten oder in der Halteplatte 1 integrierten elektrischen Leiterbahnen (nicht gezeigt) verbunden. Die elektrischen Leiterbahnen verbinden die Hall-Drehgeber 3 mit anderen elektronischen Bauteilen auf der Halteplatte und mit einer sechspoligen Stiftleiste 12 (Fig. 1a).

Die Stiftleiste 12 ermöglicht eine einfache Montage der Halteplatte 1 und eines zugehörigen Kabelsatzes, der u.a. dafür vorgesehen ist, Signale der Hall-Drehgeber 3 zu separaten Baugruppen zu führen.

Ein mit der Ankerwelle (nicht gezeigt) des Elektromotors fest verbundenes Geberrad bewirkt im Bereich der Hall-Drehgeber 3 eine zeitliche Änderung der magnetischen Flußdichte, die als Eingangssignal für die Hall-Drehgeber 3 wirkt. Aus diesem Eingangssignal wird von den Hall-Drehgebern 3 bzw. von der in den Hall-Drehgeber-ICs integrierten Schaltung zur Signalaufbereitung ein rechteckförmiges Ausgangssignal erzeugt, dessen Frequenz proportional zur Drehzahl des Elektromotors ist.

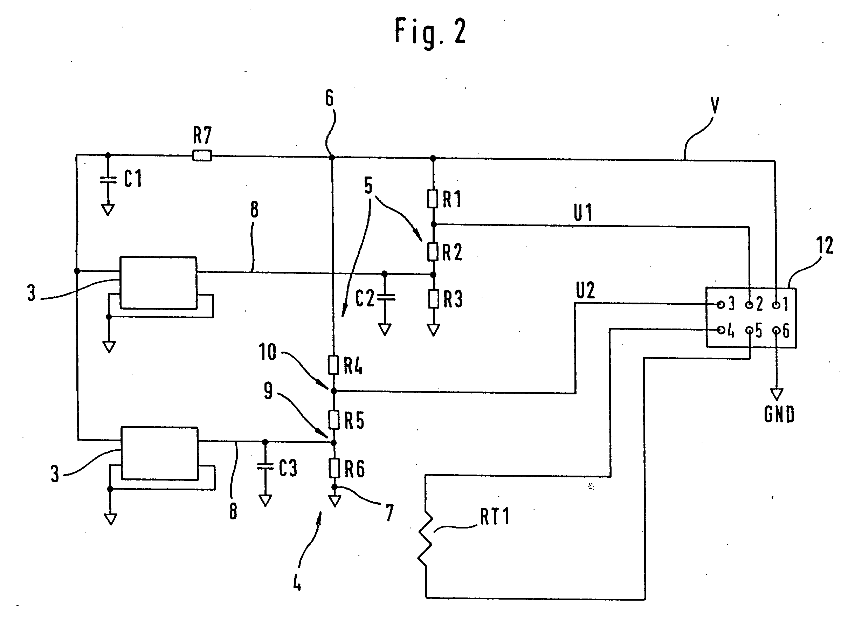

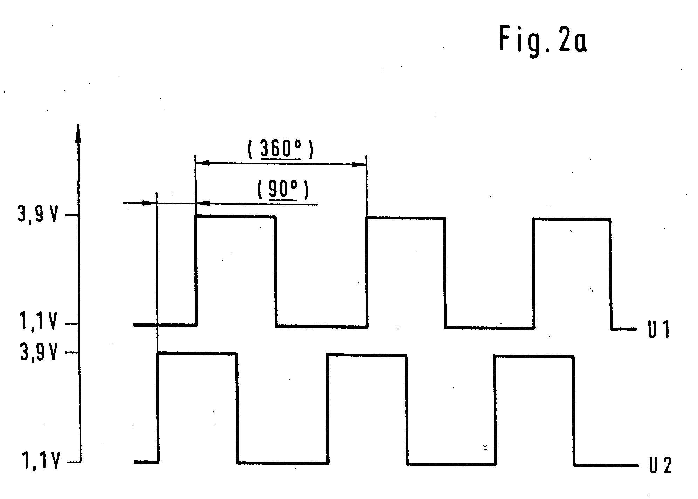

Wie dem Schaltplan in Fig. 2 zu entnehmen ist, wird das an einem Signalausgang 8 des Drehgebers 3 anliegende Ausgangssignal auf einen Spannungsteiler 5 geführt, der drei Ohmwiderstände R1, R2, R3 bzw. R4, R5, R6 in Reihenschaltung aufweist. Dabei ist für jeden der beiden Drehgeber 3 ein separater Spannungsteiler 5 vorgesehen. Beide Spannungsteiler 5 zusammen werden als Diagnoseschaltung 4 bezeichnet und sind, genau wie die beiden Drehgeber 3, direkt auf der Halteplatte 1 angeordnet.

Die elektrische Kontaktierung der Diagnoseschaltung 4 gemäß dem Schaltplan in Fig. 2 ist durch elektrische Leiterbahnen realisiert, die direkt auf der Halteplatte 1 angebracht sind und die Bauteile der Diagnoseschaltung 4 mit anderen elektronischen Bauteilen wie z.B. den Drehgebern 3 verbinden.

Wie aus Fig. 2 ersichtlich, ist ein erster Knoten 6 des Spannungsteilers 5 mit der Versorgungsspannung V der Schaltung aus Fig. 2 als erstem Bezugspotential verbunden. Die Versorgungsspannung V beträgt 5V. Ein zweiter Knoten 7 des Spannungsteilers 5 ist mit dem Masse-Bezugspotential GND der dargestellten Schaltung verbunden, d.h. eine Potentialdifferenz von 5V zwischen der Versorgungsspannung und dem Masse-Bezugspotential GND liegt an dem Spannungsteiler 5 an.

Der Signalausgang 8 eines Drehgebers 3 ist mit einem dritten Knoten 9 des Spannungsteilers 5 verbunden, und eine erste Signalleitung U1 ist mit einem vierten Knoten 10 des Spannungsteilers 5 verbunden. Ebenso ist eine zweite Signalleitung U2 mit dem entsprechenden Knoten des zweiten Spannungsteilers 5 verbunden.

Die beiden Drehgeber 3 sind relativ zueinander und zu dem Geberrad so auf der Halteplatte 1 angeordnet, dass aus einer Phasenverschiebung zwischen ihren Ausgangssignalen die Drehrichtung des Elektromotors ermittelbar ist.

Figur 2a zeigt den zeitlichen Verlauf der Signale U1, U2, die in einer noch zu beschreibenden Weise von den Ausgangsignalen der beiden Drehgeber abhängen und eine Phasenverschiebung von 90° zueinander aufweisen. Aus der Information, welches der beiden Signale U1, U2 zuerst eine steigende/fallende Flanke aufweist, ist die Drehrichtung des Elektromotors ermittelbar.

Im Normalbetrieb liegt an einem Signalausgang 8 eines Drehgebers 3 ein Rechtecksignal mit den Pegeln 0V entspr. logisch Null bzw. 5V entspr. logisch Eins an. Diese Pegel werden durch die Spannungsteiler 5 umgesetzt, und zwar, wie aus Fig. 2a ersichtlich auf die Werte von 1,1V entspr. logisch Null bzw. 3,9V entspr. logisch Eins, wodurch die Signale U1 und U2 definiert werden.

Die Diagnoseschaltung 4 ermöglicht je nach interner Beschaltung des Signalausgangs 8 eines Drehgebers 3 die Erkennung eines Kurzschlusses des Signalausgangs 8 u.a. mit der Versorgungsspannung V und mit Masse GND. In einem derartigen Fehlerfall nimmt das entsprechende Signal U1/U2 einen von den für den Normalbetrieb definierten Pegeln verschiedenen Wert an. Die jeweiligen Pegel können durch Wahl der Ohmwiderstände R1 bis R6 angepasst werden.

Ein weiteres Element der Schaltung in Fig. 2 ist der Temperatursensor RT1, der direkt auf der Halteplatte 1 angebracht ist und die Temperatur der Halteplatte 1 bzw. des Elektromotors erfasst. Laut Schaltplan sind die Anschlüsse des Temperatursensors RT1 direkt auf die Stiftleiste 12 geführt, was durch direkt auf der Halteplatte befindliche elektrische Leiterbahnen realisiert ist.

Für eine genaue Temperaturüberwachung ist es zweckmäßig, wenn der Temperatursensor RT1 in gutem thermischen Kontakt zur Halteplatte 1 steht. Der Temperatursensor RT1 ist vom Typ PT1000.

Es ist möglich, den Elektromotor abzuschalten, sobald eine vorgebbare Maximaltemperatur der Halteplatte 1 erreicht ist. Alternativ kann bei einer Ansteuerung des Elektromotors mittels Pulsweitenmodulation (PWM) auch direkt das Tastverhältnis des PWM-Signals in Abhängigkeit der von dem Temperatursensor RT1 erfassten Temperatur eingestellt werden, um eine temperaturabhängige Leistungsregelung des Elektromotors zu realisieren.

Besonders vorteilhaft für einen universellen Einsatz des Elektromotors ist eine Temperaturbeständigkeit der Halteplatte zusammen mit den zusätzlichen elektronischen Bauteilen von mehr als 160°C. Durch die Überwachung der Temperatur mittels Temperatursensor RT1 kann der Betriebspunkt des Elektromotors unter Ausnutzung der hohen Temperaturbeständigkeit der Halteplatte 1 samt elektronischen Bauteilen so gewählt werden, dass die Temperatur der Halteplatte 1 einen vorgebbaren Maximalwert von z.B. 150°C gerade nicht überschreitet, was eine optimale Ausnutzung der Leistung des Elektromotors gestattet. Herkömmliche Systeme ohne Temperaturüberwachung sind demgegenüber in ihrer Leistungsfähigkeit und Flexibilität stark beschränkt, weil sie - unter Beachtung einer zulässigen Maximaltemperatur der Halteplatte bzw. des Elektromotors - stets nur so angeseteuert werden dürfen, dass auch unter ungünstigen Umständen wie z.B. erhöhter Umgebungstemperatur keinesfalls die Maximaltemperatur überschritten wird.

Die Kondensatoren C2, C3 dienen als Schutz für die Signalausgänge 8 der Drehgeber 3. Der durch den Ohmwiderstand R7 und den Kondensator C1 gebildete Tiefpaß schützt die Drehgeber 3 vor Wechselspannungsanteilen der Versorgungsspannung V. Gleichzeitig wird mit R7 eine versorgungsspannungsseitige Eingangsstrombegrenzung für die Drehgeber 3 erreicht.

## Patentansprüche

1. Halteplatte (1) für einen Elektromotor, die eine Bürstenanordnung und Entstörbauteile (2) aufweist, **dadurch gekennzeichnet, dass** zusätzliche elektronische Bauteile direkt auf der und/oder integriert in der Halteplatte (2) angebracht sind.

2. Halteplatte (1) nach Anspruch 1, **dadurch gekennzeichnet, dass** elektrische Leiterbahnen zur Kontaktierung der Bürstenanordnung und/oder der Entstörbauteile direkt auf der und/oder integriert in der Halteplatte (1) angebracht sind.

3. Halteplatte (1) nach einem der vorstehenden Ansprüche, **dadurch gekennzeichnet, dass** elektrische Leiterbahnen zur Kontaktierung der zusätzlichen elektronischen Bauteile direkt auf der und/oder integriert in der Halteplatte (1) angebracht sind.

4. Halteplatte (1) nach einem der vorstehenden Ansprüche, **dadurch gekennzeichnet, dass** mindestens ein Drehgeber (3) zur Erfassung der Drehzahl des Elektromotors direkt auf der und/oder integriert in der Halteplatte (1) angebracht ist.

5. Halteplatte nach Anspruch 4, **dadurch gekennzeichnet, dass** der/die Drehgeber (3) als Hall-Drehgeber ausgebildet ist/sind.

6. Halteplatte (1) nach Anspruch 4 oder 5, **dadurch gekennzeichnet, dass** die Drehgeber (3) so angeordnet sind, dass Ausgangssignale der Drehgeber (3) eine Phasenverschiebung aufweisen, aus der die Drehrichtung des Elektromotors ermittelbar ist.

7. Halteplatte (1) nach einem der vorstehenden Ansprüche, **dadurch gekennzeichnet, dass** eine Diagnoseschaltung (4) direkt auf der und/oder integriert in der Halteplatte (1) angebracht ist.

8. Halteplatte (1) nach Anspruch 7, **dadurch gekennzeichnet, dass** die Diagnoseschaltung (4) mindestens einen, vorzugsweise ohmschen Spannungsteiler (5) aufweist, wobei ein erster Knoten (6) des Spannungsteilers (5) mit einem ersten Bezugspotential der Diagnoseschaltung (4) und ein zweiter Knoten (7) des Spannungsteilers (5) mit einem zweiten Bezugspotential der Diagnoseschaltung (4) verbunden ist.

9. Halteplatte (1) nach Anspruch 8, **dadurch gekennzeichnet, dass** ein Signalausgang (8) eines Drehgebers mit einem dritten Knoten (9) des Spannungsteilers (5) verbunden ist, und dass eine Signalleitung (U2) mit einem vierten Knoten (10) des Spannungsteilers (5) verbunden ist.

10. Halteplatte (1) nach einem der vorstehenden Ansprüche, **dadurch gekennzeichnet, dass** ein Temperatursensor (RT1) direkt auf der und/oder integriert in der Halteplatte (1) angebracht ist.

11. Halteplatte (1) nach einem der vorstehenden Ansprüche, **dadurch gekennzeichnet, dass** die Temperaturbeständigkeit der Halteplatte (1) mit den zusätzlichen elektronischen Bauteilen mehr als 160°C beträgt.

12. Halteplatte (1) nach einem der Ansprüche 10 oder 11, **dadurch gekennzeichnet, dass** der Elektromotor in Abhängigkeit eines Signals des Temperatursensors (RT1) ansteuerbar ist.

13. Elektromotor mit einer Halteplatte (1) nach einem der vorstehenden Ansprüche.
